# EUROPEAN PATENT APPLICATION

(11) **EP 2 818 352 A1**
(43) Date of publication of application: **31.12.2014**
(21) Application number: 13868110.1
(22) Date of filing: 20.12.2013
(51) Int. Cl.: B60K 28/10, B60K 28/14, F02D 41/22

(54) **APPARATUS FOR PREVENTING VEHICLE FROM ABRUPTLY ACCELERATING**

(30) Priority: 31.12.2012 KR 20120158040; 28.03.2013 KR 20130033608
(71) Applicant: Kim, Jin Min, Seoul 150-841 (KR)
(72) Inventor: Kim, Jin Min, Seoul 150-841 (KR)
(74) Representative: Bockhorni & Kollegen
(86) International application number: PCT/KR2013/011938
(87) International publication number: WO 2014/104657

(57) **Abstract**

The present invention relates to an apparatus for preventing a vehicle from abruptly accelerating, which is electrically connected between the fuel supply line of a vehicle and the starter. The apparatus comprises an electromagnetic switch that cuts off the fuel supply of the fuel supply line if a circuit breaker cuts off the current at a predetermined engine revolution per minute. The apparatus has a simple structure manufactured at a low cost, and almost completely prevents the accident caused by abrupt acceleration of a vehicle by cutting off the fuel supply immediately when the vehicle reaches the predetermined engine revolution per minute causing the abrupt acceleration.

## Description

### Technical Field

The present invention relates to an apparatus for preventing a vehicle from suddenly accelerating, and, more particularly, to an apparatus for preventing a vehicle from suddenly accelerating, which is connected to the fuel supply line of a vehicle and is configured such that current is cut off by the on/off operation of a current breaker based on the set number of revolutions per minute (RPM) of an engine and, when current is cut off as described above, an opening/closing means operates at the same time that a compressed compression spring is restored by the release of the operation of an electromagnet, thereby cutting off the supply of fuel of the fuel supply line.

### Background Art

Sudden acceleration refers to a vehicle spontaneously moving forward or rearward even when there is no driver's accelerator pedal manipulation and gear shift action in the state of having been started. When a vehicle spontaneously moves forward or rearward, a situation occurs in which the vehicle may be damaged or the driver of the vehicle and a pedestrian who is walking near the vehicle that is subjected to sudden acceleration faces a dangerous situation.

Although the reason why sudden acceleration occurs has not been clearly and completely determined, it is presumed to be a driver's manipulation error or the aging or defectiveness of a part of a vehicle. When the reason is presumed to be the aging or defectiveness of a part of a vehicle, the sudden acceleration of the vehicle is presumed to be caused by the aging or defectiveness of a sensor that controls air supplied to an engine or operates an ECU. More specifically, the aging or defectiveness of an air temperature sensor (ATS), a water temperature sensor (WTS), a throttle position sensor (TPS), an oxygen sensor, or the like may be taken as an example. For example, when a WTS has been aged or is defective, water temperature cannot be detected, an ECU that has received information detected by the sensor determines the temperature of an engine to be low and thus allows a large amount of fuel to be injected, thereby increasing the RPM of the engine to a range from 7000 to 8000 rpm. This may be presumed to provide the cause of sudden acceleration.

Accordingly, although many attempts to prevent an incident attributable to the sudden acceleration of vehicles have been made so far, a definite solution has not been found yet. Many apparatuses for preventing sudden acceleration that have been presented as solutions so far are problematic in that they are not perfect, and superior apparatuses are also problematic in that they are all fabricated in expensive complicated structures due to a variety of parts.

### Disclosure

### Technical Problem

Accordingly, the present invention has been made keeping in mind the above problems occurring in the prior art, and an object of the present invention is to provide an apparatus for preventing a vehicle from suddenly accelerating, in which an opening/closing means connected to the fuel supply line of a vehicle is installed, and the opening/closing means operates simultaneously with an off operation in which the operation of an electromagnet is released when current is cut off by a current breaker at the set RPM of the engine of the vehicle, thereby cutting off the supply of fuel of the fuel supply line.

Another object of the present invention is to provide an apparatus for preventing a vehicle from suddenly accelerating, in which the current breaker is separately connected, and thus can be repaired when it abnormally operates.

A further object of the present invention is to provide an apparatus for preventing a vehicle from suddenly accelerating, in which a previously installed ECU is used as a device for detecting the set RPM of an engine or a separate sensor is connected to and installed in an instrument panel.

### Technical Solution

In order to accomplish the above objects, the present invention provides an apparatus for preventing sudden acceleration, the apparatus being electrically connected and installed between a fuel supply line and starting device of a vehicle, wherein the apparatus operates opening/closing means using an electromagnet whose operation is stopped by a current breaker that cuts off current at a set number of revolutions per minute (RPM) of an engine of a vehicle, thereby cutting off supply of fuel of the fuel supply line.

Preferably, the apparatus includes a connection body configured such that a fuel inlet and a fuel outlet connected to the fuel supply line are formed and installed; an electromagnet installed on the connection body; a current breaker connected to the electromagnet, and installed to control an on/off operation of the electromagnet; a control device connected to the current breaker, and configured to detect the RPM of the engine and operate the current breaker; and an opening/closing valve, that is, opening/closing means, installed in the connection body, and configured to be moved forward/rearward by the on/off operation of the electromagnet in order to open/close the fuel outlet of the fuel supply line.

Preferably, the apparatus includes an electromagnet installed on the connection body; a current breaker connected to the electromagnet, and installed to control an on/off operation of the electromagnet; a control device connected to the current breaker, and configured to detect the RPM of the engine and operate the current breaker; and an opening/closing plate, that is, opening/closing means, installed in the connection body, and configured to be rotated by the on/off operation of the electromagnet in order to open/close the fuel outlet of the fuel supply line.

Preferably, the opening/closing valve is a permanent magnet around which a compression spring is placed, is inserted into a reception portion in the connection body and faces the fuel outlet, and the electromagnet is installed around the fuel outlet of the connection body; or the opening/closing valve is an iron metal or a permanent magnet around which a compression spring is placed, is inserted into a reception portion in the connection body and faces the fuel outlet, and the electromagnet is attached onto a rear surface of the connection body behind the opening/closing valve.

Preferably, the opening/closing plate is an iron metal, including a compression spring placed and fastened between a rear surface of the opening/closing plate and the connection body, and faces the fuel outlet in the connection body, and the electromagnet is attached onto the rear surface of the connection body behind the opening/closing plate.

Preferably, the opening/closing valve is a plate-shaped iron metal in which a metal compression spring is attached onto a rear surface thereof, is inserted into the connection body and faces the fuel outlet, the electromagnet is attached onto a rear surface of the connection body behind the opening/closing valve, and the opening/closing valve is configured such that a plate of the opening/closing valve is located after the fuel inlet in the connection body when the plate moves forward and closes the fuel outlet and the plate is located before the fuel inlet in the connection body when the plate moves rearward and opens the fuel outlet.

Preferably, a reception portion that is inserted into the compression spring is formed on a rear surface of the plate of the opening/closing valve, and the length of the reception portion is the length between a rear surface of the plate and a rear end of an inside of the connection body when the opening/closing valve has been moved rearward.

Preferably, the current breaker is separately connected by a connection jack; and the control device is an electronic control unit (ECU) of the vehicle, or a sensor separately connected and installed onto the instrument panel of the vehicle.

Preferably, the connection body and the reception portion are made of material that is not affected by magnetism of the electromagnet.

Preferably, the apparatus further includes a casing configured to accommodate the electromagnet and the connection body in sequence, and configured such that one or more connection through holes are formed in a lower portion thereof and a cutaway portion into and through which a (or the) fuel inlet of the connection body is inserted and protrudes is formed in an upper portion thereof; and a cover configured such that a through hole into and through which a (or the) fuel outlet of the connection body is inserted and protrudes is formed at a center thereof, and combined with an upper end of the casing in a threaded manner.

Preferably, the apparatus further includes a casing configured to accommodate the electromagnet and the connection body in sequence, and configured such that one or more connection through holes are formed in a lower portion thereof and a cutaway portion into and through which a (or the) fuel inlet of the connection body is inserted and protrudes is formed in an upper portion thereof; and a cover configured such that a through hole into and through which a (or the) fuel outlet of the connection body is inserted and protrudes is formed in a portion extending from a center thereof to an outside thereof, and combined with an upper end of the casing in a threaded manner.

### Advantageous Effects

The apparatus for preventing a vehicle from suddenly accelerating according to the present invention has an advantage in which when the RPM of the engine of a vehicle that unexpectedly causes rapid acceleration is reached, the supply of fuel is simply cut off, thereby being able to almost completely prevent a sudden acceleration incident.

Furthermore, the apparatus for preventing a vehicle from suddenly accelerating according to the present invention has an advantage in which anybody can purchase and install it without burden because the apparatus for preventing a vehicle from suddenly accelerating has a simple structure and thus can be fabricated at low cost.

Moreover, the apparatus for preventing a vehicle from suddenly accelerating according to the present invention has an advantage in which the current breaker can be separated and simply repaired even when the current breaker abnormally operates because the current breaker can be separately connected by the connection jack.

### Description of Drawings

Fig. 1 is a longitudinal sectional view illustrating an apparatus for preventing a vehicle from suddenly accelerating according to a first embodiment of the present invention before the operation thereof;
Fig. 2 is a longitudinal sectional view illustrating the apparatus for preventing a vehicle from suddenly accelerating according to the first embodiment of the present invention after the operation thereof;
Fig. 3 is a longitudinal sectional view illustrating an apparatus for preventing a vehicle from suddenly accelerating according to a second embodiment of the present invention before the operation thereof;
Fig. 4 is a longitudinal sectional view illustrating the apparatus for preventing a vehicle from suddenly accelerating according to the first embodiment of the present invention after the operation thereof;
Fig. 5 is a longitudinal sectional view illustrating an apparatus for preventing a vehicle from suddenly accelerating according to a third embodiment of the present invention before the operation thereof;
Fig. 6 is a longitudinal sectional view illustrating the apparatus for preventing a vehicle from suddenly accelerating according to the third embodiment of the present invention after the operation thereof;
Fig. 7 is a longitudinal sectional view illustrating an apparatus for preventing a vehicle from suddenly accelerating according to a fourth embodiment of the present invention before the operation thereof;
Fig. 8 is a longitudinal sectional view illustrating the apparatus for preventing a vehicle from suddenly accelerating according to the fourth embodiment of the present invention after the operation thereof;
Fig. 9 is a longitudinal sectional view illustrating an apparatus for preventing a vehicle from suddenly accelerating according to a fifth embodiment of the present invention before the operation thereof;
Fig. 10 is a longitudinal sectional view illustrating the apparatus for preventing a vehicle from suddenly accelerating according to the fifth embodiment of the present invention after the operation thereof;
Fig. 11 is a perspective view of a casing and a cover that accommodates and stores the apparatus for preventing a vehicle from suddenly accelerating according to the present invention;
Fig. 12 is a longitudinal sectional disassembled view of the casing and the cover that accommodates and stores the apparatus for preventing a vehicle from suddenly accelerating according to the present invention;
Fig. 13 is a longitudinal sectional assembled view of the casing and the cover that accommodates and stores the apparatus for preventing a vehicle from suddenly accelerating according to the present invention; and
Fig. 14 is a perspective view of a casing and a differently shaped cover that accommodates and stores the apparatus for preventing a vehicle from suddenly accelerating according to the present invention.

### Best Mode

Preferred embodiments of an apparatus for preventing a vehicle from suddenly accelerating according to the present invention will be described in detail below with reference to the accompanying drawings. The present invention is not limited to embodiments disclosed below, but may be implemented in various different various forms. These embodiments are provided merely to make the disclosure of the present invention perfect and to completely inform those skilled in the art about the scope of the present invention.

The sudden acceleration of a vehicle occurs in a rapid acceleration state. The rapid acceleration state corresponds to the abnormal rpm of an engine based on the type and purposes of engine. Rapid acceleration normally occurs at an abnormal numerical value of at least 4000 rpm. According to drivers who have directly experienced incidents, it is asserted that the incidents attributable to such sudden acceleration have resulted from rapid acceleration attributable to suddenly increasing rpm regardless of whether the incidents have been caused by the defectiveness of a vehicle or their mistake.

Accordingly, the apparatus for preventing a vehicle from suddenly accelerating according to the present invention is installed between the fuel supply line and starting device of a vehicle, and is configured such that an opening/closing means that cuts off the supply of fuel when sudden acceleration attributable to the rapid acceleration of the vehicle occurs is operated by an electromagnet, that is, such that, when current is cut off by the current breaker at the set RPM of the engine of the vehicle, the opening/closing means that has been brought into contact and stationary due to the magnetism of the electromagnet is operated at the same time that the operation of the electromagnet is released, thereby cutting off the supply of fuel of a fuel supply line.

The configuration and operation of the apparatus for preventing a vehicle from suddenly accelerating according to the present invention is more specifically described below.

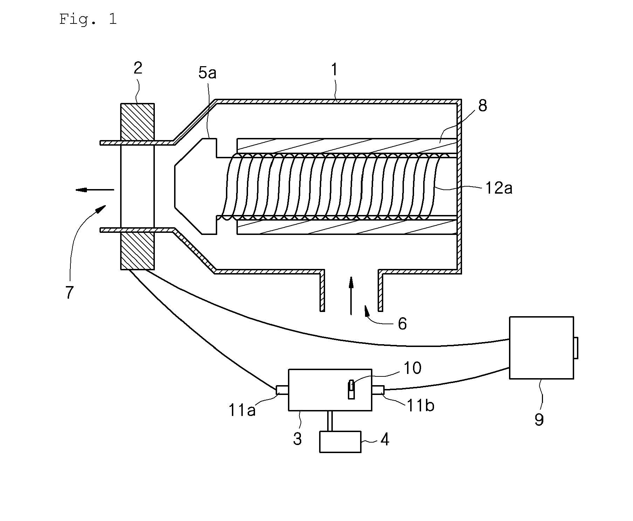

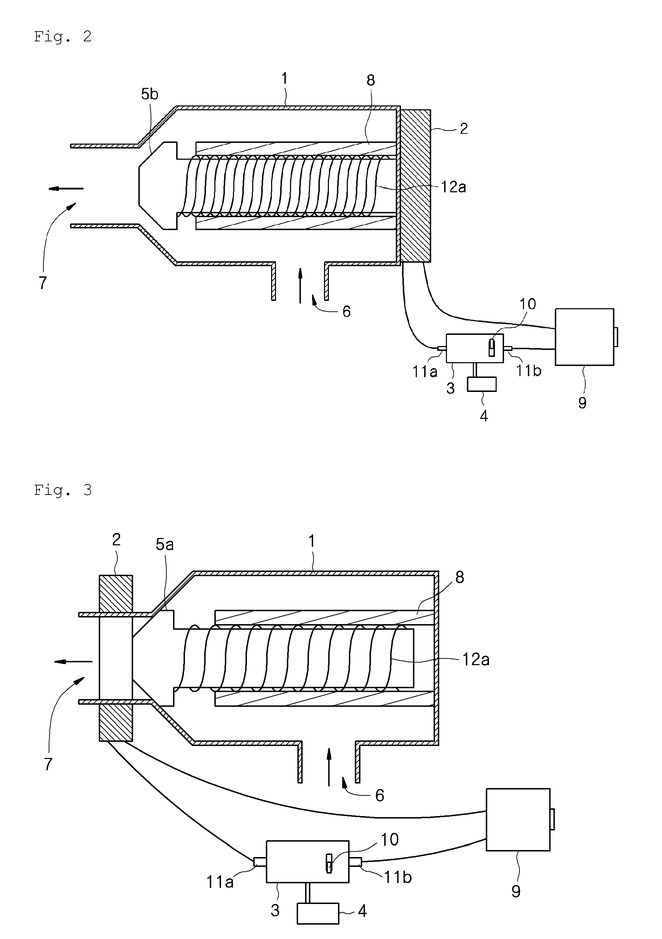

Fig. 1 is a longitudinal sectional view illustrating an apparatus for preventing a vehicle from suddenly accelerating according to a first embodiment of the present invention before the operation thereof, and Fig. 2 is a longitudinal sectional view illustrating the apparatus for preventing a vehicle from suddenly accelerating according to the first embodiment of the present invention after the operation thereof.

As illustrated in Figs. 1 and 2, the apparatus for preventing a vehicle from suddenly accelerating according to the first embodiment of the present invention is configured to include a connection body 1, an electromagnet 2, a current breaker 3, a control device 4, and an opening/closing valve 5a.

The connection body 1 is formed in the shape of a rectangular box or a cylinder, and is installed by connecting to the conduit of a fuel supply line. A fuel inlet 6 is formed through one side of the connection body 1, and also a fuel outlet 7 is formed through the front portion of the connection body. A cylindrical reception portion 8 into which the opening/closing valve 5 is inserted is fastened from the connection body 1 and the fuel outlet 7. Accordingly, the fuel inlet 6 and the fuel outlet 7 are connected to a fuel supply line in an airtight manner. It is preferred that the connection body 1 and the reception portion 8 are made of material, such as copper or stainless steel, that is not affected by the magnetism of the electromagnet 2.

The electromagnet 2 is formed in the shape of a coil, and is fitted around the fuel outlet 7 of the connection body 1. Since current used in vehicles is DC, the direction of N and S poles is always in a fixed state.

The current breaker 3 is installed on a predetermined portion of the vehicle. One side of the current breaker 3 is electrically connected to the electromagnet 2 and the other side thereof is electrically connected to a starting device 9. The current breaker 3 is provided with an on/off switch 10, thereby automatically cutting off current or performing manual recovery. It is preferred that, when the current breaker 3 is connected with the electromagnet 2 and the starting device 9 by electric lines, both sides of the current breaker 3 can be separately connected using connection jacks 11a and 11b, and thus maintenance and repair can be performed when the current breaker 3 abnormally operates. Another line that is not connected to the current breaker 3 is connected between the electromagnet 2 and the starting device 9.

The control device 4 is electrically connected with the current breaker 3, and thus detects the RPM of the engine of the vehicle. The value of the RPM of the engine that is equal to or larger than a specific value and causes sudden acceleration is set, and then the current of the current breaker 3 is cut off by the off operation of the on/off switch 10 when the control device 4 detects the RPM of the engine. Since the RPM of the engine that cause sudden acceleration are usually above 4000 rpm, the set RPM of the engine may be set to a value above 4000 rpm. The RPM of the engine are set to a different value depending on the type of engine and the purposes of the vehicle. An electronic control unit (ECU) already installed in the vehicle is used as the control device 4, and the ECU detects the RPM of the engine and then controls the on/off operation of the current breaker 3. A separate sensor may be installed in the vehicle separately from the ECU as the control device and connected to an instrument panel, thereby detecting the RPM of the engine displayed on the instrument panel and then controlling the on/off operation of the current breaker 3.

The opening/closing valve 5a is the opening/closing means of the fuel outlet 7 of the connection body 1. The opening/closing valve 5a is configured in the form of a pin whose front end has a conical shape (trapezoidal sectional shape), and is inserted into the reception portion 8 of the connection body 1 along with a compression spring 12a placed on the portion of the opening/closing valve 5a behind the front end, so that the cone-shaped portion faces the fuel outlet 7 of the connection body 1. This opening/closing valve 5a is implemented as a permanent magnet, and is configured to have the same polarity as the opposite electromagnet 2. In this case, since the direction of the polarity of the electromagnet 2 is fixed, the opening/closing valve 5a is arranged such that the direction of the polarity of the opening/closing valve 5a is opposite to that of the electromagnet 2. Meanwhile, if the internal diameter of the fuel outlet 7 is larger than the external diameter of the front end of the opening/closing valve 5a, the fuel outlet 7 may not be processed in a conical shape.

The operation of the apparatus for preventing sudden acceleration according to the first embodiment of the present invention, configured as described above, is described. As illustrated in Fig. 1, when the electromagnet 2 operates in the key on state of the starting device 9 or the operation state of a starter motor, the same polarity is established, and the opening/closing valve 5a is retracted and enters the state of compressing the compression spring 12a.

Thereafter, when the control device 4 detects the RPM of the engine at which the vehicle performs rapid acceleration and causes sudden acceleration, the on/off switch 10 of the current breaker 3 operates and performs an off operation, thereby cutting off current. When the current is cut off as described above, the electromagnet 2 loses magnetism, and the opening/closing valve 5a that has been compressed while compressing the compression spring 12a due to the same polarity moves forward at the same time that the compression spring 12a is restored, stops the fuel outlet 7, and then cuts off the supply of fuel, as illustrated in Fig. 2.

In order to restore the opening/closing valve 5a after the operation, the current breaker 3 is subjected to an on operation by manually operating the on/off switch 10, and, at the same time, the electromagnet 2 comes to have magnetism again and pushes the opposite opening/closing valve 5a due to different polarities, with the result that fuel is normally supplied via the fuel outlet 7. It will be apparent that in the key off state of the starting device 9, the engine is stopped regardless of the ECU, the opening/closing valve 5 moves forward, stops the fuel outlet 7, and thus cuts off the supply of fuel.

Meanwhile, when the rapid acceleration of the vehicle is detected and thus the apparatus for preventing sudden acceleration according to the present invention operates, it is preferable to operate the emergency lights of the vehicle, thereby providing notification of the operation of the apparatus for preventing sudden acceleration.

### Mode for Invention

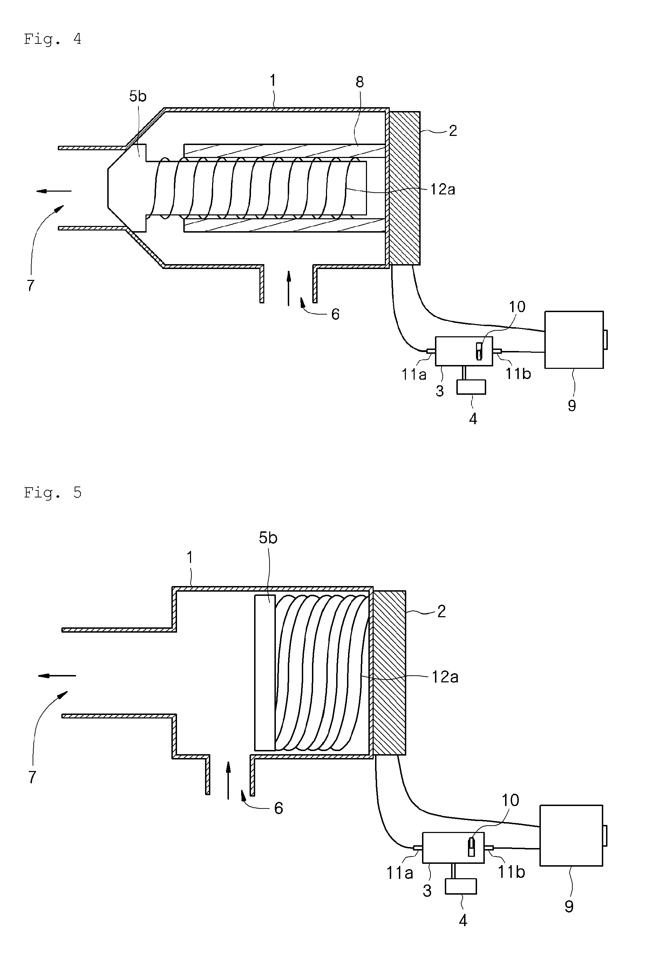

Fig. 3 is a longitudinal sectional view illustrating an apparatus for preventing a vehicle from suddenly accelerating according to a second embodiment of the present invention before the operation thereof, and Fig. 4 is a longitudinal sectional view illustrating the apparatus for preventing a vehicle from suddenly accelerating according to the first embodiment of the present invention after the operation thereof.

As illustrated in Figs. 3 and 4, the apparatus for preventing suddenly acceleration according to the second embodiment is almost similar to the apparatus for preventing sudden acceleration, except that an electromagnet 2 is attached to the opposite side of a fuel outlet 7, that is, the rear surface of the outside of a connection body 1, and an opening/closing valve 5b that is an opening/closing means for the fuel outlet 7 of a connection body 1 is formed of an iron metal or a permanent magnet. Since all the configurations and the operations thereof are the same as those of the first embodiment except the location of the electromagnet 2 and the material and operation the opening/closing valve 5b, the same symbols are assigned.

The operation of the apparatus for preventing sudden acceleration according to the second embodiment of the present invention, configured as described above, is described. As illustrated in Fig. 3, when the electromagnet 2 operates in the key on state of a starting device 9 or the operation state of a starter motor, the same polarity is established, and the opening/closing valve 5a formed of an iron metal is retracted by the magnetism of the electromagnet 2 while compressing a compression spring 12a and then comes into contact with the electromagnet 2.

Thereafter, when a control device 4 detects the RPM of the engine at which the vehicle performs rapid acceleration and causes sudden acceleration, the on/off switch 10 of a current breaker 3 operates and performs an off operation, thereby cutting off current. When the current is cut off as described above, the electromagnet 2 loses magnetism, and the opening/closing valve 5a that has been in contact with the electromagnet 2 while compressing the compression spring 12a due to magnetism moves forward at the same time that the compression spring 12a is restored, stops the fuel outlet 7, and then cuts off the supply of fuel, as illustrated in Fig. 4.

In order to restore the opening/closing valve 5a after the operation, the on/off switch 10 of the current breaker 3 is manually operated in the same manner as in the above-described apparatus for preventing sudden acceleration according to the first embodiment.

When the opening/closing valve 5b is formed of a permanent magnet, the electromagnet 2 and the opening/closing valve 5b that are opposite each other are made to have different polarities. Since the direction of the polarities of the electromagnet 2 are fixed, arrangement is performed such that the direction of the polarities of the opening/closing valve 5b is opposite that of the electromagnet 2.

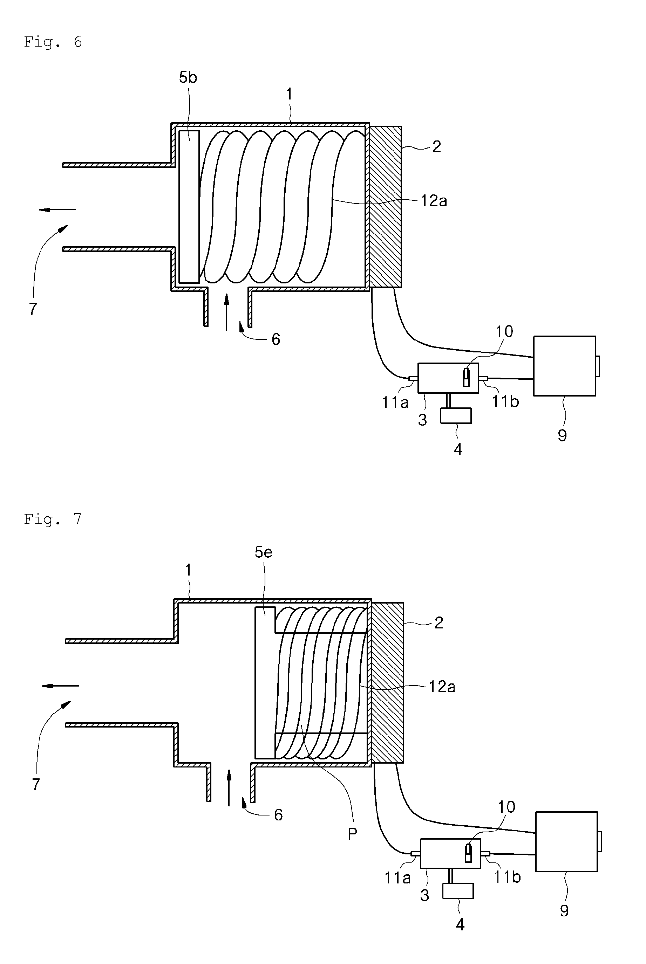

Fig. 5 is a longitudinal sectional view illustrating an apparatus for preventing a vehicle from suddenly accelerating according to a third embodiment of the present invention before the operation thereof, and Fig. 6 is a longitudinal sectional view illustrating the apparatus for preventing a vehicle from suddenly accelerating according to the third embodiment of the present invention after the operation thereof.

As illustrated in Figs. 5 and 6, the apparatus for preventing suddenly acceleration according to the third embodiment is almost similar to the apparatus for preventing sudden acceleration according to the second embodiment, except that an opening/closing valve 5b that is an opening/closing means for the fuel outlet 7 of a connection body 1 is formed of a plate-shaped iron metal with a compression spring 12a located behind the opening/closing valve 5b. Since all the configurations are the same as those of the second embodiment except the configuration of the plate-shaped opening/closing valve 5d, the same symbols are assigned.

The operation of the apparatus for preventing sudden acceleration according to the third embodiment of the present invention, configured as described above, is described. As illustrated in Fig. 5, when the electromagnet 2 operates in the key on state of a starting device 9 or the operation state of a starter motor, the plate of the opening/closing valve 5d that is formed of an iron metal or a permanent magnet is retracted while compressing the compression spring 12a due to the magnetism of the electromagnet 2. In this case, it is preferable to use the compression spring 12a whose compression force has been appropriately adjusted such that the location of the plate of the opening/closing valve 5d is located before a fuel inlet 6.

Thereafter, when a control device 4 detects the RPM of the engine at which the vehicle performs rapid acceleration and causes sudden acceleration, the on/off switch 10 of a current breaker 3 operates and performs an off operation, thereby cutting off current. When the current is cut off as described above, the electromagnet 2 loses magnetism, and the plate of the opening/closing valve 5b that has been retracted while compressing the compression spring 12a due to the magnetism moves forward at the same time that the compression spring 12a is restored, stops the fuel outlet 7, and then cuts off the supply of fuel, as illustrated in Fig. 6. In this case, it is preferable to use the compression spring 12a whose compression force has been appropriately adjusted such that the location of the plate of the opening/closing valve 5d is located after the fuel inlet 6.

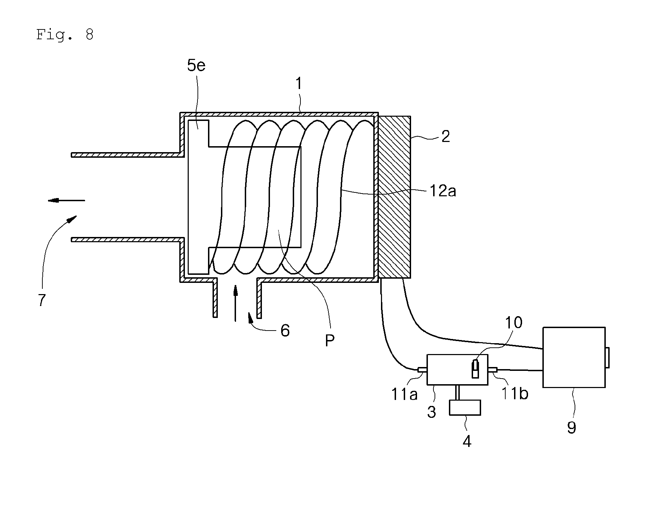

Fig. 7 is a longitudinal sectional view illustrating an apparatus for preventing a vehicle from suddenly accelerating according to a fourth embodiment of the present invention before the operation thereof, and Fig. 8 is a longitudinal sectional view illustrating the apparatus for preventing a vehicle from suddenly accelerating according to the fourth embodiment of the present invention after the operation thereof.

As illustrated in Figs. 7 and 8, the apparatus for preventing a vehicle from suddenly accelerating according to the fourth embodiment of the present invention includes a T-shaped opening/closing valve 5e that is formed by forming a protruding reception portion P on the rear surface of the plate-shaped opening/closing valve 5d according to the third embodiment, so that the reception portion P is inserted into the center portion of the compression spring 12a. Since all the configurations except the T-shaped opening/closing valve 5e are the same as those of the third embodiment, the same symbols are assigned. The operation of the T-shaped opening/closing valve 5e is the same as that of the plate-shaped opening/closing valve 5d of the third embodiment. However, it is preferable to limit the length of the reception portion P so that, when the T-shaped opening/closing valve 5e has been moved backward by the operation of the electromagnet 12a, the T-shaped opening/closing valve 5e is located before the fuel inlet 6, as illustrated in Fig. 8. The length of the reception portion P is about a length between the rear surface of the head portion of the T-shaped opening/closing valve 5e and the rear end of the inside of the connection body 1.

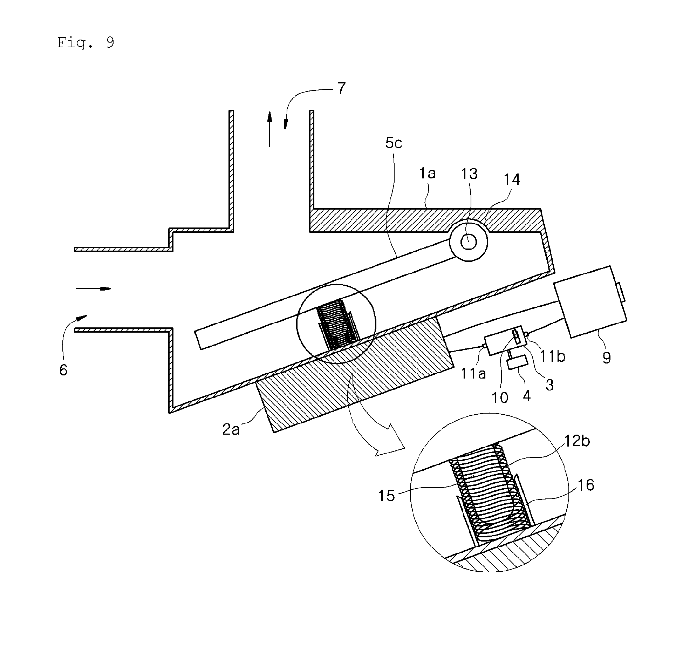

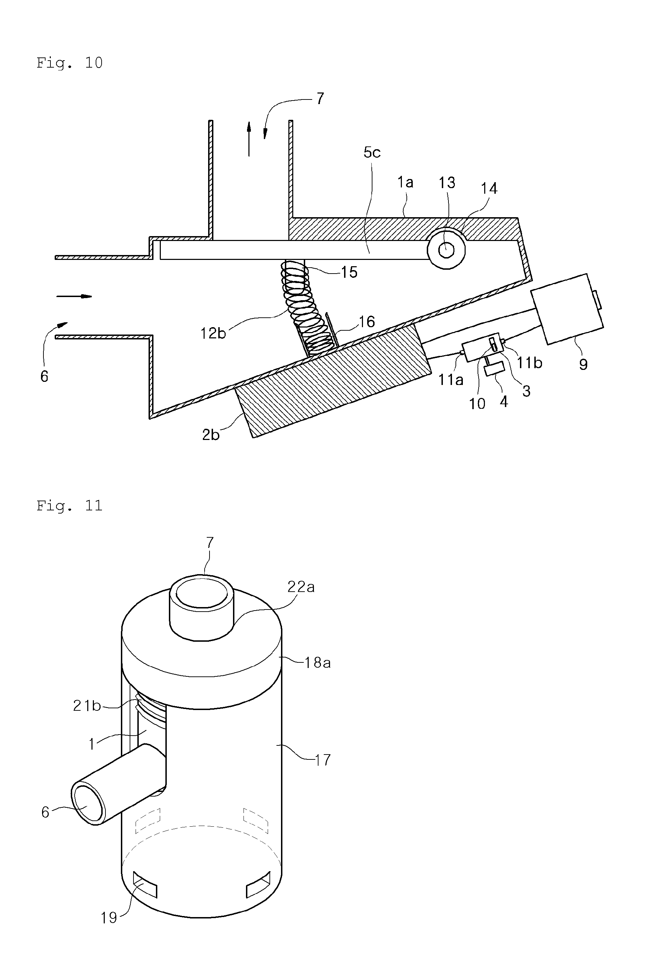

Fig. 9 is a longitudinal sectional view illustrating an apparatus for preventing a vehicle from suddenly accelerating according to a fifth embodiment of the present invention before the operation thereof, and Fig. 10 is a longitudinal sectional view illustrating the apparatus for preventing a vehicle from suddenly accelerating according to the fifth embodiment of the present invention after the operation thereof.

As illustrated in Figs. 9 and 10, in the apparatus for preventing a vehicle from suddenly accelerating according to the fifth embodiment of the present invention, a connection body 1a is formed in a right triangular box shape, and an opening/closing plate 5c that is an opening/closing means for selectively opening and closing a fuel outlet 7 is installed inside the connection body 1a.

A hinge pin 13 is connected to one end of the opening/closing plate 5c opposite the fuel outlet 7 of a connection body 1a, and is fastened to the inside of the connection body 1a. The opening/closing plate 5c is configured to be rotated toward the fuel outlet 7 around the hinge pin 13. In this case, when a portion to which the hinge pin 13 of the opening/closing plate 5c is connected is fastened to the inside of the connection body 1a, the portion is fastened by inserting the portion into a reception recess 14 formed in the connection body 1a. Accordingly, when the opening/closing plate 5c is rotated, the opening/closing plate 5c is allowed to maximally come into tight contact with the fuel outlet 7. The opening/closing plate 5c is formed of an iron metal.

A protrusion 15 is formed on the rear surface of the opening/closing plate 5c opposite the fuel outlet 7, and a cylindrical spring reception portion 16 is formed on the inside surface of the connection body 1a opposite the protrusion 15. The compression spring 12b that is placed around the protrusion 15 and fastened to the opening/closing plate 5c is inserted into the spring reception portion 16 and fastened to the connection body 1a. In this case, it is preferred that one end of the protrusion 15 of the opening/closing plate 5c is formed to be rounded and the surface of the upper end of the spring reception portion 16 is formed to be inclined inward.

Furthermore, an electromagnet 2a is attached to a portion opposite the protrusion 15 of the opening/closing plate 5c, that is, the rear surface of the connection body 1a outside the connection body 1a opposite the spring reception portion 16.

Since the configurations of all elements except the configurations of the connection body 1a, the opening/closing plate 5c including the compression spring 12b, and the electromagnet 2a are the same as those of the apparatus for preventing sudden acceleration according to the first or second embodiment of the present invention, the same symbols are assigned.

The operation of the apparatus for preventing sudden acceleration according to the fifth embodiment of the present invention, configured as described above, is described. As illustrated in Fig. 9, when the electromagnet 2a operates in the key on state of a starting device 9 or the operation state of a starter motor, the opening/closing plate 5c that is formed of an iron metal is retracted while compressing the compression spring 12b due to the magnetism of the electromagnet 2a, and thus the protrusion 15 enters the state of being slightly inserted into the spring reception portion 6.

Thereafter, when a control device 4 detects the RPM of the engine at which the vehicle performs rapid acceleration and causes sudden acceleration, the on/off switch 10 of a current breaker 3 operates and performs an off operation, thereby cutting off current. When the current is cut off as described above, the electromagnet 2a loses magnetism, and the opening/closing plate 5c that has been retracted while compressing the compression spring 12a due to the magnetism is rotated around the hinge pin 13 at the same time that the compression spring 12a is restored, stops the fuel outlet 7, and then cuts off the supply of fuel, as illustrated in Fig. 10.

In order to restore the opening/closing plate 5c after the operation, the on/off switch 10 of the current breaker 3 is manually operated in the same manner as in the above-described apparatus for preventing sudden acceleration according to the first or second embodiment.

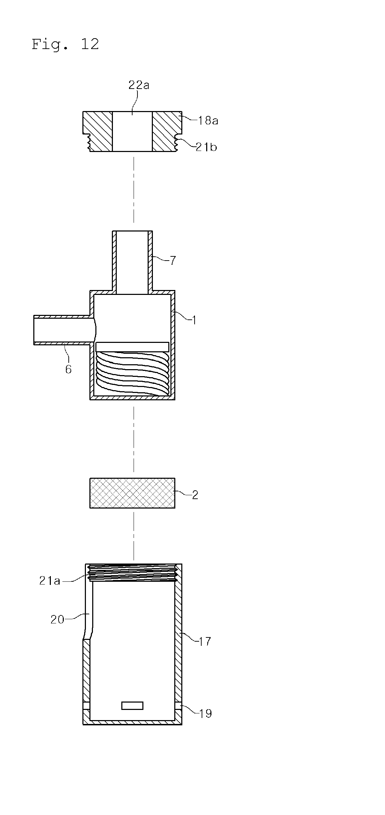

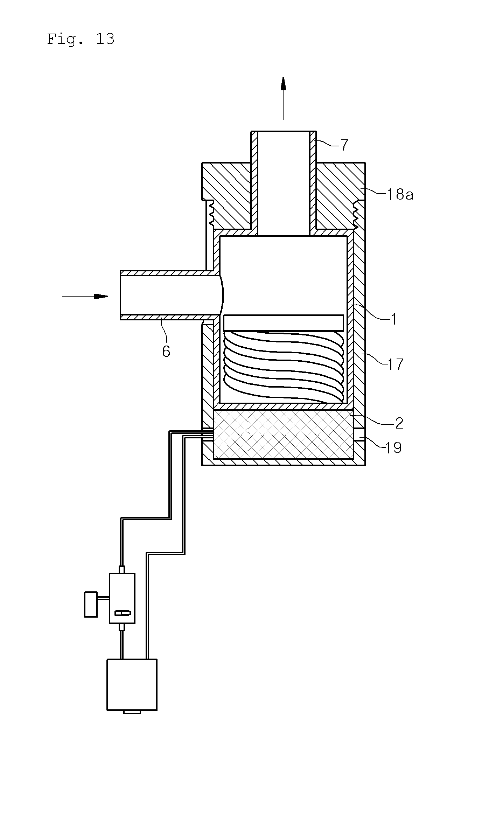

Fig. 11 is a perspective view of a casing and a cover that accommodates and stores the apparatus for preventing a vehicle from suddenly accelerating according to the present invention, Fig. 12 is a longitudinal sectional disassembled view of the casing and the cover that accommodates and stores the apparatus for preventing a vehicle from suddenly accelerating according to the present invention, and Fig. 13 is a longitudinal sectional assembled view of the casing and the cover that accommodates and stores the apparatus for preventing a vehicle from suddenly accelerating according to the present invention.

As illustrated in Figs. 11 to 13, in order to reliably bring the connection body 10 and the electromagnet 2 into tight contact with each other while safely store and accommodate the connection body 10 and the electromagnet 2, a casing 17 and a cover 18a are used.

In the casing 17, the electromagnet 2 is accommodated in the bottom side of the inside of the casing 17, and the connection body 1 is accommodated above the electromagnet 2. In this case, connection holes 19 are formed along the circumferential surface of the outside of the casing 17 at four locations, and electric wires used to electrically connect the electromagnet 2, the current breaker 3 and the starting device 9 are drawn via the connection holes 19. Although the connection holes 19 are illustrated as being formed at four locations in the diagram, the connection holes 19 may be formed at one or more locations as desired. Furthermore, a cutaway portion 20 that is cut from the upper end of the casing 17 to about the center of the casing 17 is formed in a predetermined portion of the outer circumferential surface of the upper portion of the casing 17 in order to allow the fuel inlet 6 of the connection body 1 to protrude, and female threads 21a are formed on the inner circumferential surface of the upper end of the casing 17.

The cover 18a is configured such that male threads 21b are formed on the outer circumferential surface of the lower portion of the cover 18a, and is thus engaged with the casing 17 in a threaded manner via the female threads 21a formed on the upper end of the casing 17. The casing 17 is covered with the cover 18a through threaded engagement, and thus the connection body 1 is reliably brought into tight contact with the electromagnet 2. A through hole 22a that receives the fuel outlet 7 of the connection body 1 and allows it to protrude when the cover 18a is fastened to the casing 17 by covering the casing 17 with the cover 18a through threaded engagement is formed across the center portion of the cover 18a.

Since all the configurations of the apparatus for preventing sudden acceleration except the casing 17, the cover 18a, the connection body 1 and the electromagnet 2 are the same as described above, the same symbols are assigned.

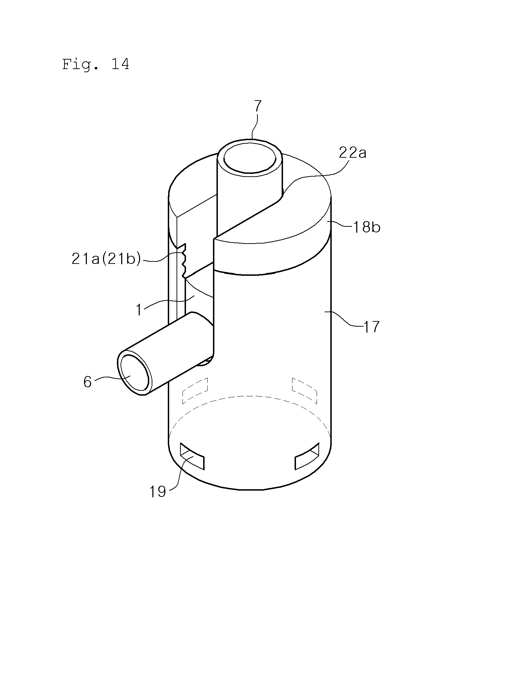

Fig. 14 is a perspective view of a casing and a differently shaped cover that accommodates and stores the apparatus for preventing a vehicle from suddenly accelerating according to the present invention.

As illustrated in Fig. 14, a casing 17 that accommodates the connection body 1 and the electromagnet 2 is not changed, but the shape of a cover 18b is different. A through portion 23 that is formed by cutting away a portion extending from the center of the cover 18b to the outside thereof is provided. Accordingly, when the cover 18b is fastened to the casing 17 by covering the casing 17 with the cover 18b in a threaded manner, the fuel outlet 7 of the connection body 1 is allowed to protrude via the through portion 23 and then the casing 17 is covered with the cover 18b in a threaded manner.

Also in this case, since all the configurations of the apparatus for preventing sudden acceleration except the casing 17, the cover 18b, the connection body 1 and the electromagnet 2 are the same as those described above, the same symbols are assigned.

Although the apparatus for preventing a vehicle from suddenly accelerating according to the present invention has been described with reference to the illustrated drawings above, the present invention is not limited to the embodiments and the diagrams disclosed herein, but various modifications can be made by those skilled in the art within the scope of the technical spirit of the present invention.

### Industrial Applicability

The present invention may be usefully used as an apparatus for preventing a vehicle from suddenly accelerating that is capable of, when the RPM of the engine of a vehicle that unexpectedly causes rapid acceleration is reached, simply cutting off the supply of fuel, thereby being able to almost completely prevent a sudden acceleration incident.

Furthermore, the present invention can be purchased without burden and usefully used as an apparatus for preventing a vehicle from suddenly accelerating by anybody because the present invention has a simple structure and thus can be fabricated at low cost.

Moreover, the present invention can be usefully used as an apparatus for preventing a vehicle from suddenly accelerating in which the current breaker can be separated and simply repaired even when the current breaker abnormally operates because the current breaker can be separately connected by the connection jack.

## Claims

1. An apparatus for preventing sudden acceleration, the apparatus being electrically connected and installed between a fuel supply line and starting device of a vehicle,
wherein the apparatus operates opening/closing means using an electromagnet whose operation is stopped by a current breaker that cuts off current at a set number of revolutions per minute (RPM) of an engine of a vehicle, thereby cutting off supply of fuel of the fuel supply line.

2. The apparatus of claim 1, wherein the apparatus for preventing sudden acceleration comprises:
a connection body configured such that a fuel inlet and a fuel outlet connected to the fuel supply line are formed and installed;
an electromagnet installed on the connection body;
a current breaker connected to the electromagnet, and installed to control an on/off operation of the electromagnet;
a control device connected to the current breaker, and configured to detect an RPM of the engine and operate the current breaker; and
an opening/closing valve, that is, opening/closing means, installed in the connection body, and configured to be moved forward/rearward by the on/off operation of the electromagnet in order to open/close the fuel outlet of the fuel supply line.

3. The apparatus of claim 1, wherein the apparatus for preventing sudden acceleration comprises:
an electromagnet installed on the connection body;
a current breaker connected to the electromagnet, and installed to control an on/off operation of the electromagnet;
a control device connected to the current breaker, and configured to detect an RPM of the engine and operate the current breaker; and
an opening/closing plate, that is, opening/closing means, installed in the connection body, and configured to be rotated by the on/off operation of the electromagnet in order to open/close the fuel outlet of the fuel supply line.

4. The apparatus of claim 2, wherein the opening/closing valve is a permanent magnet around which a compression spring is placed, is inserted into a reception portion in the connection body and faces the fuel outlet, and the electromagnet is installed around the fuel outlet of the connection body.

5. The apparatus of claim 2, wherein the opening/closing valve is an iron metal or a permanent magnet around which a compression spring is placed, is inserted into a reception portion in the connection body and faces the fuel outlet, and the electromagnet is attached onto a rear surface of the connection body behind the opening/closing valve.

6. The apparatus of claim 2, wherein the opening/closing valve is a plate-shaped iron metal in which a metal compression spring is attached onto a rear surface thereof, is inserted into the connection body and faces the fuel outlet, the electromagnet is attached onto a rear surface of the connection body behind the opening/closing valve, and the opening/closing valve is configured such that a plate of the opening/closing valve is located after the fuel inlet in the connection body when the plate moves forward and closes the fuel outlet and the plate is located before the fuel inlet in the connection body when the plate moves rearward and opens the fuel outlet.

7. The apparatus of claim 6, wherein a reception portion that is inserted into the compression spring is formed on a rear surface of the plate of the opening/closing valve, and a length of the reception portion is a length between a rear surface of the plate and a rear end of an inside of the connection body when the opening/closing valve has been moved rearward.

8. The apparatus of claim 3, wherein the opening/closing plate is an iron metal, including a compression spring placed and fastened between a rear surface of the opening/closing plate and the connection body, and faces the fuel outlet in the connection body, and the electromagnet is attached onto a rear surface of the connection body behind the opening/closing plate.

9. The apparatus of any one of claims 1 to 8, wherein the current breaker is separately connected by a connection jack.

10. The apparatus of any one of claims 2 to 8, wherein the control device is an electronic control unit (ECU) of the vehicle.

11. The apparatus of any one of claims 2 to 8, wherein the control device is a sensor that is separately connected and installed onto an instrument panel of the vehicle.

12. The apparatus of any one of claims 2 to 8, wherein the connection body and the reception portion are made of material that is not affected by magnetism of the electromagnet.

13. The apparatus of any one of claims 1, 2, and 4 to 7, further comprising a casing configured to accommodate the electromagnet and the connection body in sequence, and configured such that one or more connection through holes are formed in a lower portion thereof and a cutaway portion into and through which a (or the) fuel inlet of the connection body is inserted and protrudes is formed in an upper portion thereof; and a cover configured such that a through hole into and through which a (or the) fuel outlet of the connection body is inserted and protrudes is formed at a center thereof, and combined with an upper end of the casing in a threaded manner.

14. The apparatus of any one of claims 1, 2, and 4 to 7, further comprising a casing configured to accommodate the electromagnet and the connection body in sequence, and configured such that one or more connection through holes are formed in a lower portion thereof and a cutaway portion into and through which a (or the) fuel inlet of the connection body is inserted and protrudes is formed in an upper portion thereof; and a cover configured such that a through hole into and through which a (or the) fuel outlet of the connection body is inserted and protrudes is formed in a portion extending from a center thereof to an outside thereof, and combined with an upper end of the casing in a threaded manner.
